(19) Europäisches Patentamt
European Patent Office
Office européen des brevets

(11) Publication number: **0 055 579 B1**

(12) **EUROPEAN PATENT SPECIFICATION**

(45) Date of publication of patent specification: **20.03.91** (51) Int. Cl.[5]: **G06F 12/08**

(21) Application number: **81306020.9**

(22) Date of filing: **22.12.81**

(54) **Cache memories with double word access.**

(30) Priority: **31.12.80 US 221854**

(43) Date of publication of application: **07.07.82 Bulletin 82/27**

(45) Publication of the grant of the patent: **20.03.91 Bulletin 91/12**

(84) Designated Contracting States: **DE FR GB IT NL**

(56) References cited:
GB-A- 2 011 679
US-A- 3 967 247
US-A- 4 055 851

(73) Proprietor: **Bull HN Information Systems Inc.**
**Corporation Trust Center 1209 Orange Street**
**Wilmington Delaware(US)**

(72) Inventor: **Stanley, Philip E.**
**40 Harney Lane**
**Westboro Massachusetts 01851(US)**
Inventor: **Peters, Arthur**
**53 Easy Street**
**Sudbury Massachusetts 01776(US)**
Inventor: **Brown, Richard P.**
**22 Joseph Reed Lane**
**Acton Massachusetts 01720(US)**
Inventor: **Lemay, Richard A.**
**515 Brook Street**
**Carlisle Massachusetts 01741(US)**

(74) Representative: **Votier, Sidney David et al**
**CARPMAELS & RANSFORD 43, Bloomsbury Square**
**London WC1A 2RA(GB)**

**EP 0 055 579 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a high speed cache memory for use in a data processing system.

Modern data processors have cycle times so fast that the data transfer rates of memory systems are often unable to keep pace with their processing capabilities, with the result that the entire system becomes memory bound and inefficient because data is supplied to the processors at an insufficient rate.

Various memory structures have been adopted to resolve this problem. One of these structures is a cache memory comprising a limited-size memory having a cycle time much faster than the main or system memory of the processing system. The data stored in the cache memory comprises a constantly changing subset of the information stored in the system memory. The time penalties resulting from the continual access of the slower system memory and the relatively long data transfer path from the system memory to the processors can be avoided if the data being requested by the system processors is already stored in the much faster cache memory. It is, however, necessary to select the subset of the data to be stored in the cache memory carefully in order to minimize the number of system memory accesses that need to be performed. This can be accomplished by storing in the cache memory the information most recently requested by the system processors.

Even with the use of such cache memories, the data processing systems often remain memory bound and underutilized. As a further means to correct this problem, data processing systems have been proposed wherein two words of data are simultaneously transferred from the system memory to the system processors or other system elements in response to a single memory request. This serves as a means of reducing the number of memory requests that must be issued.

The use of double word transfers between the system pro cessors and the system memory has resulted in an incompatibility with the cache memories heretofore in existence. If a processor has requested two words from the system memory and the words were also present in the cache memory, the cache memory was not able to respond in the most efficient manner, i.e. by simultaneously transferring both of the requested data words.

In the prior art cache memories, each double word memory request resulted in two cache memory reads or writes. This caused an unnecessary duplication of memory cycles and lessened the efficiency of the cache memory.

Thus, there is a need to provide a cache memory compatible with the use of double word data transfers and capable of reading, writing, and transferring two data words in response to a single memory request.

It is accordingly an object of the present invention to provide a cache memory compatible with a data processing system wherein two words of data are simultaneously transferred between the system processors and the system memory in response to a single memory request.

Accordingly the present invention provides a cache memory characterized in that, in order to supply two data units in response to a single request, there are provided:

control means to control even means for incrementing by 1 the main memory address when odd and for passing said main memory address when even, and to control odd means (765) for incrementing by 1 the main memory address when even and for passing said main memory address when odd; and

circuit means for simultaneously supplying the incremented or non-incremented address from said even means to said first store and said first directory and the non-incremented address from said odd means to said second store and said second directory.

A cache memory with one data store and a directory for odd addresses and one data store and directory for even addresses is shown in US-A-3 967 247. They are used only for simultaneously transferring two words of data between the main memory and the cache.

A cache memory in accordance with the invention will now be described, by way of example, with reference to the drawings, in which:

Figure 1(a) is a block diagram of the data storing subsystem of the cache memory.

Figure 1(b) is a block diagram of the directory subsystem of the cache memory.

Figure 2 is a schematic illustration of the mapping of system memory address numbers to address numbers in the level 1 and level 2 even and odd data stores of the cache memory.

Figure 3 schematically illustrates the information fields included in invalid and valid segment descriptors as employed in a data processing system including the cache memory.

Figure 4(a) is a schematic illustration of the relationship between the information fields stored in the segment descriptor table as used in the development of a physical address from a virtual address by the memory management unit emplyed with the cache memory.

Figure 4(b) schematically illustrates the manner in which a physical address number is generated from a virtual address number and the information contained in a segment descriptor stored in the segment descriptor tables of the cache memory.

The cache memory is intended for use in a data processing system having two buses, a local bus and a so-called megabus, between which the cache memory is connected. The megabus has connected to it units such as a communications controller, an I/O controller, and memory modules. The local bus has connected to it a central processing unit, a commercial instructions processor, and a scientific instructions processor. The system operates with a word length of 16 bits, each word being subdivided into two 8-bit bytes.

The main object of the present invention is to provide a cache memory module wherein two data words can be simultaneously transferred into and out of the cache memory. This is accomplished as follows. When a request is made to the cache memory for two data words only the address number of the first data word (the low order or left data word) is supplied on a set of 24 virtual address lines VAIN0:23. The cache memory will search its directory of entries to determine whether a data word identified by the address number VAIN0:23 is stored in the cache. Simultaneously, the cache will determine whether the data word identified by the next successive address number, i.e., VAIN0:23 + 1, is stored in the cache. If both searches are successful, the data words identified by address numbers VAIN0:23 and VAIN0: VAIN0:23 + 1 will be addressed in the cache. This corresponds to a "fullhit" condition. If only one of the data words is stored in the cache, a partial hit occurs and it will be identified as a left hit (LFTHIT) if the resident data word is identified by VAIN0:23 or a right bit (RGTHIT) if the data word identified by VAIN0:23 + 1 is a resident in the cache.

Since the data words identified by VAIN0:23 and VAIN0:23 + 1 are stored in successive memory locations, if VAIN0:23 is an odd address number then VAIN0:23 + 1 is an even address number and vice versa.

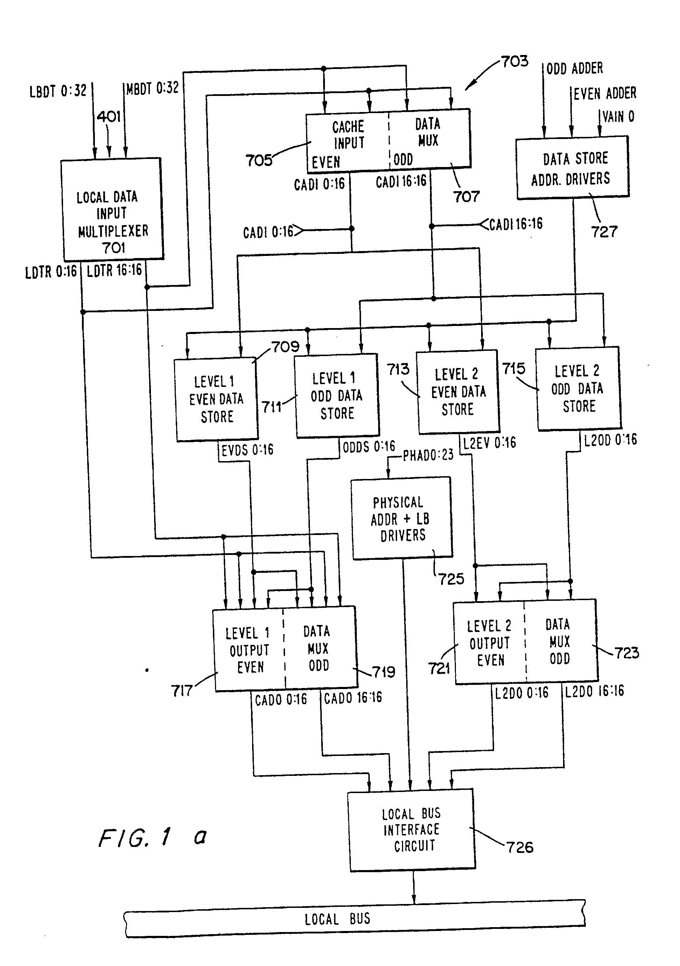

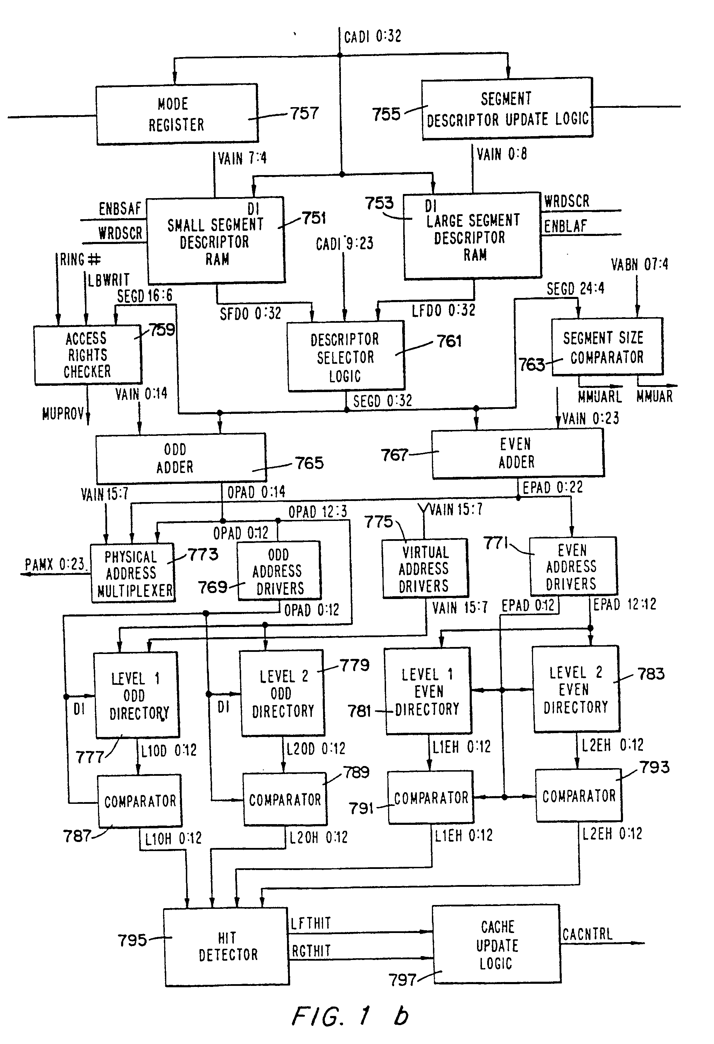

Figures 1(a) and 1(b) illustrate in block diagram form the cache memory. Specifically, Figure 1(a) is directed to the data storing subsystem of the cache memory module and includes the circuit elements for transferring data words into and out of the memory units within the cache memory module. Figure 1(b) illustrates the cache directory subsystem for maintaining a record of the addresses of the data stored in the data storing portion of the cache memory. A memory management unit used in conjunction with the cache directory subsystem includes the means for translating a virtual address into a physical address, and the logic for determining whether data requested from the main memory is also currently stored in the data storing subsystem of the cache memory module.

Referring now to Figure 1(a), the local data input multiplexer 701 is capable of receiving as inputs two 16-bit data words from a local bus, LBDT0:32, and from a megabus, MBDT0:32. It is the function of the local data input multiplexer 701 to select one of the two inputs. The lines LBDT0:32 are selected if a local bus processor is doing a system memory write and the lines MBDT0:32 are selected if the system memory is transferring data to a local bus processor in response to a memory read or if another system device is updating data words in the system memory which are also stored in the data storing subsystem of the cache memory. Also, as will be later explained, other information including segment descriptors and control signals is transferred to the cache memory via the local data input multiplexer 701.

The local data input multiplexer 701 outputs the two selected data words individually as a data word designated LDTR0:16 and a data word designated LDTR16:16.

If, for example, one of the local bus processors has requested a 2-word data transfer from the system memory and it had been determined, in the manner to be subsequently described, that the data words were not currently stored in the cache memory it is the function of the local data input multiplexer 701 to pass the two data words to both the cache data input multiplexer 703 and to the level 1 data output multiplexers 717, 719. This dual output path of the local data input multiplexer 701 further speeds up the operation of the cache memory because as the requested data words are being inputted into the data storing subsystem through the cache data input multiplexer 703 they are also supplied to the requesting local bus processor through the level 1 data output multiplexers 717, 719. Accordingly, no unnecessary time is lost waiting for the data words to be stored in the data storing subsystem of the cache memory before transferring the words to the requesting processor.

The cache data input multiplexer 703 comprises an even input multiplexer 705 and an odd input multiplexer 707. Both the even and odd input multiplexers 705, 707 receive both the data word LDTR0:16 and the data word LDTR16:16. As will be hereinafter explained, the even input multiplexer 705 is controlled to accept as an input only data words that are identified by even address numbers. Similarly, the odd input multiplexer 707 is controlled to accept as an input only data words which are identified by odd address numbers. Since, as explained below, the data words LDTR0:16 and LDTR16:16 comprise successive data words stored in the system memory, one of the data words is necessarily identified by an even address number and the other of the data words is necessarily identified by an odd address number.

The data storing subsystem of the cache memory is divided into even and odd storage banks for storing data words identified by even and odd addresses, respectively. Moreover, the even and odd data banks are each further subdivided into levels 1 and 2. This data storing structure is illustrated in Figure 1(a) as being implemented by a level 1 even data store 709, a level 1 odd data store 711, a level 2 even data store 713, and a level 2 odd data store 715. Each of the data stores is coupled to the data store address drivers 727 which receives as one input the 10 least significant bits of the physical address number.

The level 1 and level 2 even data stores 709, 713, also have inputs coupled to the outputs of the even data multiplexer 705. The level 1 and level 2 odd data stores 711, 715, each have inputs coupled to the outputs of the odd data multiplexer 707. It is a function of the data store address drivers 727 to select the address in one of the data stores where the data word, CADI0:16, identified by an even address number and the data word, CADI16:16, identified by an odd address number are to be stored.

Each of the data stores 709, 711, 713, and 715 can output a data word under the control of the data store address drivers 727. The level 1 even data store 709 outputs the data word EVDS0:16 which is received as an input by both the level 1 even (data word n) output multiplexer 717 and the level 1 odd (data word n+1) output multiplexer 719. Similarly, the level 1 odd data store 711 outputs a data word, ODDS0:16, which is received as an input by both the level 1 even and odd data output multiplexers 717, 719.

The level 2 even data store 713 outputs a data word L2EV0:16 to both the level 2 even data multiplexer 721 and the level 2 odd data multiplexer 723. Similarly, the level 2 odd data store 715 outputs a data word L2OD0:16 which is supplied as an input to both the level 2 even data output multiplexer 721 and the level 2 odd data output multiplexer 723.

The level 1 even data output multiplexer 717 selects a data word from one of its four inputs and supplies it as an output data word. CADO0:16 to the local bus. Similarly, the level 1 odd data output multiplexer 719 selects from one of its four inputs to produce a second data output word, CADO16:16. The level 2 even data output multiplexer 721 selects from one of its two inputs and supplies an output data word L2DO0:16 to the local bus. Finally, the level 2 odd data output multiplexer 723 selects one of its two input data words and supplies it as an output data word, L2DO16:16, to the local bus.

The data output multiplexers 717, 719, 721 and 723 enable the data storing subsystem Of the cache memory to perform a data steering operation on the individual data words to be supplied to the local bus. In other words, if two data words are being outputted from the level 1 even and odd data store 709, 711 they will be supplied to the local bus in a particular order. The data word CADO0:16 will correspond to a data word identified by the address number VAIN0:23. Similarly, CADO16:16 will correspond to the data word identified by the incremented address number VAIN0:23 + 1. In some instances, the high order data word outputted (the word identified by VAIN0:23) will be identified by an odd address number and the low order data word outputted (the word identified by VAIN0:23 + 1) will be identified by an even address number. Conversely, the high order data word may be identified by an even address number and the low order data word may be identified by an odd address number. Thus, the level 1 even and odd data output multiplexers 717, 719 enable the steering of the outputs of the level 1 odd and even data stores 709, 711 into the appropriate high order and low order data output words CADO16:16, respectively.

The level 2 even data output multiplexer 721 and level 2 odd data multiplexer 723 are also capable of performing this data steering operation on two data words transferred to the local bus from the level 2 even data store 713 and the level 2 odd data store 715.

The physical-address-to-local-bus drivers 725 enable the direct transfer of an address from the megabus to the local bus without passing through the data storing subsystem of the cache memory.

Before describing in detail the cache directory subsystem illustrated in Figure 1(b), the manner in which data words stored in the system memory are mapped or stored into corresponding storage locations in the data storing subsystem of the cache memory will be explained. First, the system memory is capable of storing up to a megaword or more of data. These data words, as is known, are identified by sequentially increasing address numbers 0, 1, 2,...N where N+1 is the total number of memory words.

As embodied herein, each of the data stores in the cache data storing subsystem 709, 711, 713, 715 is capable of storing 1,024 data words. These data words are also identified by sequentially increasing address numbers, 0, 1, 2, ...1023. Since there are two data stores in the even data bank and two data stores in the odd data bank the cache memory is capable of storing 2,048 data words identified by even address numbers and 2,048 data words identified by odd address numbers.

The address numbers for the system memory are mapped, i.e., correspond in a specific manner, to the address numbers in the data stores of the cache memory. For example, address number 0 of the level 1 and level 2 even data stores 709, 711 correspond to the address numbers of the system memory which equal 0 modulo 2,048. Thus, address number zero in the level 1 even data store and the level 2 even data store correspond to the address numbers 0, 2,048, 4,096, 6,144,...(n x 2,048). The address numbers in the system memory which map to the address number 1 in the level 1 odd data store and the level 2 odd data store are identified by the quantity 1 + (n x 2,048). Both the cache data stores and the system memory employ physical address numbers whereas the programs performed by the data processing system employ virtual address numbers.

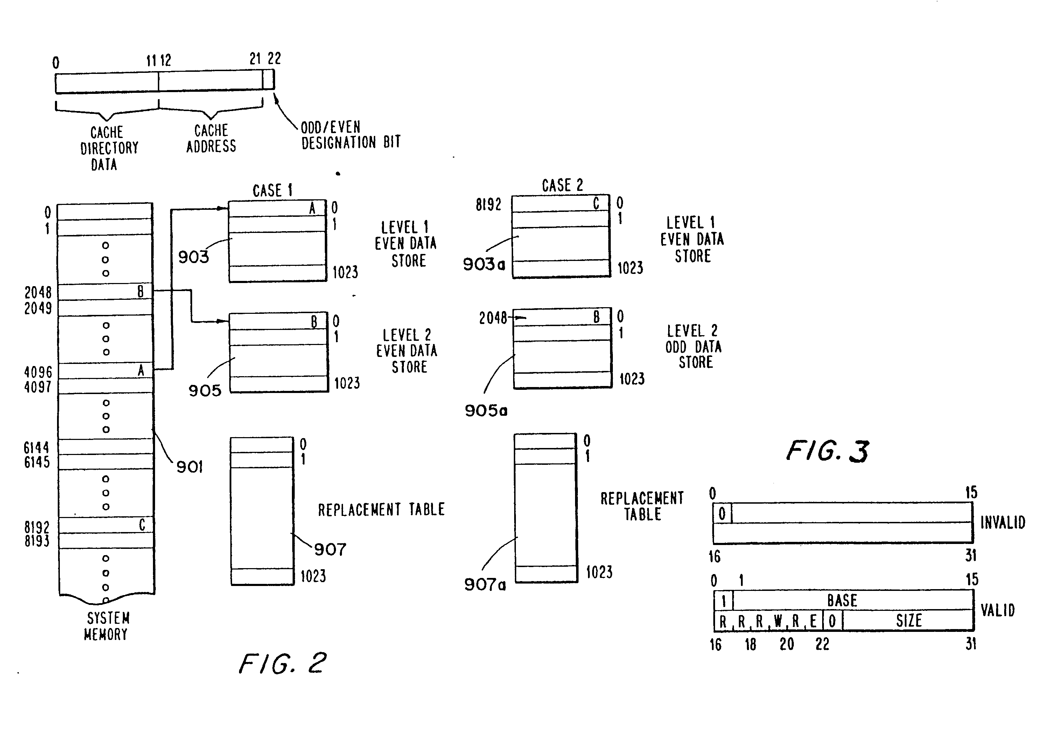

As illustrated in Figure 2, a 23-bit physical address contains three distinct fields relating to the cache memory. The least significant address bit VAIN22 is the odd/even designation bit and is used by the data storing and cache directory subsystems of the cache memory to select their the even data store or the odd data store according to whether the bit is a 0 or a 1. The 10-bit fields OPAD12:10 and EPAD12:10 designate the data store addresses whithin the data storing subsystem of the cache memory. Finally, the 12-bit fields OPAD0:12 and EPAD0:12 correspond to the information which is employed in the processing operations of the cache directory subsystem. As will hereinafter be described, this field enables the addressing of level 1 and level 2 address numbers directories in order to determine whether data words identified by specific address numbers are stored in the cache data stores.

Figure 2 further depicts a portion of the system memory 901 including storage locations identified by address numbers 0, 1,...8,193. The level 1 even data store 903 and level 2 even data store 905 are also depicted. In the initial state, address number 0 of the level 1 even data store 903 corresponds to address 4,096 of the system memory. Address 0 of the level 2 even data store 905 corresponds to system memory address number 2,048. Thus, address number 0 of the level 1 even data store 903 stores the data word that is also stored in address number 4,096 of the system memory 901 and address number 0 of the level 2 even data store 905 stores the data word that is also stored in address 2,048 of the system memory 901. Both system address numbers, 2,048 and 4,096, are equal, modulo 2,048, and map to the same cache storage location, i.e., address number 0 of the even data stores. However, subdividing the even data stored into levels 1 and 2 enables the cache memory to store two different data words identified by two different address numbers in the system memory which happen to correspond or map to the same address number in the cache data store. Thus, both data words A and B may be simultaneously resident in the cache.

The present cache memory operates upon the principle that if a data word in the cache storing section must be replaced by another data word, the data word that has been resident in the cache for the longest period will be replaced first. In other words, if a request is made for a data word identified by a third address number in the system memory different from the address numbers having their associated data words stored in address number location 0 of the level 1 and level 2 even data stores 903, 905, whichever of the data words stored in address number location 0 of the even data stores that has been resident in the cache for the longest period of time will be replaced.

A replacement table 907 is retained in the cache directory subsystem in order to identify which one of the two corresponding addresses in the level 1 and level 2 even data stores is to be replaced first. As illustrated in Figure 2, the replacement table 907 comprises a 1,024 x 1 bit memory. The 1,024 memory locations in the replacement table 907 correspond to similarly numbered address locations in the level 2 and level 2 even data store. When a data word is written into one of the address number locations in the level 1 even data store 903, a ONE is also written into the correspondingly numbered storage location in the replacement, table 907. This indicates that the next data word to be written which maps to the same cache data store address number location should be written into the level 2 even data store 905. At the same time, the entry in the corresponding storage location in the replacement table 907 is to be changed to a ZERO. Thus, for any location in the replacement table 907, a ZERO entry identifies an address number location in the level one even data store 903 to receive the next data word corresponding to that replacement table location and a ONE entry identifies a data store location in the level 2 even data store 905 to receive the next data word corresponding to that replacement table location.

Referring again to Figure 2, the replacement table 907 initially has a 0 stored in address number location 0. This indicates that if it is necessary to write another data word having a system memory address number that maps to address number 0 of the even data store, that address word is to be written into address number location 0 of the level 1 even data store.

This is precisely what is illustrated to have occurred in the even data stores 903a, 905a and replacement table 907a labelled case 2 in Figure 2. In response to a request being made for the data word in the system memory address number location 8192 it was necessary to store that data word in the cache memory. The address number 8192 modulo 2,048 is equal to 0. Since the address number is even, the word will be stored in one of the even data stores 903a or 905a. Since address number location zero in the replacement table 907 was 0, the data word will be written into the storage loccation identified by address number 0 of the level 1 even data store 903a. A similar replacement table, not shown, is provided for the odd data stores.

Figure 1(b), illustrates, in block diagram form, the cache directory subsystem for maintaining and updating the directory of address numbers identifying the data words stored in the level 1 and level 2 even and odd data stores. The two data words, CADI0:16 and CADI16:16, as outputted from the even and odd cache data input multiplexers 705, 707 (Figure 1(a)), are supplied as inputs to the cache directory subsystem. These two data words are supplied to the small segment descriptor RAM 751, the large segment descriptor RAM 753, the segment descriptor update logic 755, and the mode register 757. The small segment descriptor RAM 751 comprises a random access memory for storing 32-bit segment descriptors associated with different ones of 16 small memory segments maintained in the system memory.

Figure 3 illustrates the formats for a valid and an invalid segment descriptor. If bit 0 of the segment descriptor is 0 then the segment descriptor update logic 755 recognozes the segment descriptor as being invalid. However, if bit 0 is 1 then the segment descriptor update logic 755 recognizes the segment descriptor as being valid.

Bits 1 to 15 of a valid segment descriptor contain the segment base and the rest of a valid segment descriptor contains access rights and segment size information.

Access to data in memory is performed under what is known as rings of privilege, which are well known. To summarize, any device which is accessing the system memory includes a status register for storing a 2-bit current ring number having the value of 0 to 3. The most privileged ring is ring 0 and the least privileged ring is ring 3. A system device or element can only read a memory segment which is marked, in the segment descriptor field, with a ring number which is equal to or greater than the current ring number of the requesting device or element.

The read ring number field RR (SEGD16:2) sets forth the ring number for reading within a segment. The write ring number field RW (SEGD18:2) sets forth the priority for writing within a segment. Finally, the execute ring number field RE (SEGD20:2) sets forth the priority for executing instructions stored within a segment.

Bits 23-32 of a valid segment descriptor sets forth the size field for the system memory segment associated with the segment descriptor. The size field is presumed to have eight trailing 0's. If the offset portion of the virtual address is less than or equal to the size field then the requested data word is within the segment. If the offset portion of a virtual address is larger than the numbers stored in the size field, then an illegal request is being made because the physical address corresponding to the virtual address offset does not reside within the requested system memory segment.

In the present system, the possible virtual address space, as designated by the virtual address numbers VAIN0:22, is divided up into 16 segments of up to 64K words per segment. The first of these segments is further divided into 16 small segments of up to 4K words each. The remaining 15 of the original segments are referred to as large segments.

Each of the large and the snall segments includes a number of data words that is a multiple of 256. The actual size of a large or small segment is set forth in the previously explained segments size field, SEGD24:8 (Figure 3).

The virtual address segments can be resident anywhere within the physical system memory as long as the inforamtion corresponding to a virtual address segment begins at a physical address number that is a multiple of 256. The virtual address segments can overlap each other in the physical memory totally, partially or not at all.

A small segment description RAM 751 stores the sixteen 32-bit segment descriptors associated with the small segments. Similarly, a large segment descriptor RAM 753 stores the fifteen 32-bit segment descriptors which describe the large virtual memory segments.

The dividing of the system memory into segments, both small and large, enables the system to operate in a virtual addressing mode. In such a virtual addressing mode, instead of using actual physical memory address for storing data and operations, the programmer is able to address relative to the first location of a program which is identified as virtual address number 0. When the program and data are stored in the system memory, however, they are assigned to particular segments. The physical address numbers of the system memory storage locations storing the program can be computed by incrementing the virtual addresses in the program by the physical base address numbers stored in the segment descriptors.

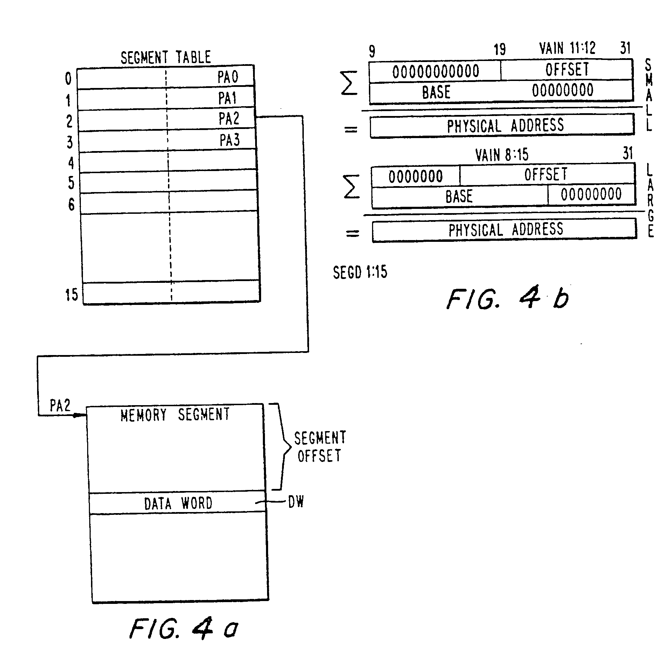

This is illustrated in Figure 4(a) which schematically displays the large segment descriptor table. The first segment descriptor in the table, segment descriptor 0, is indicated to have a base of PA0, i.e. a specific physical address within the system memory, meaning that the initial location of the first large segment is physical address number PA0 in the system memory. Segment descriptor 1 in the large segment descriptor table has a base or initial address of PA1 and the physical address numbers PA2, PA3, PA4, etc. correspond to the physical address numbers storing the information associated with the first virtual address numbers of each of the virtual address segments.

As illustrated in Figure 4(a), the third segment descriptor in the large segment descriptor RAM has been addressed and the base stored therein addresses physical address PA2 in the system memory. When addressing a particular data word within this memory segment, the segment base is incremented by a segment offset referred to as VAIN11:12, the twelve last significant bits of the virtual address number, for a small memory segment and VAIN7:16, the sixteen last significant bits of a virtual address number, for a large memory segment. Thus, the physical address number of a data word DW, Figure 4(a), is determined by adding the segment base, PA2, to the segment offset as specified in VAIN15:16.

Figure 4(b) illustrates the generation of physical addresses for both small and large segments. In the case of a small segment, a 23 bit physical address is generated by adding the 12-bit offset field, VAIN11:12 preceded by 11 leading 0's to the 15-bit base field concatenated with 8 trailing 0's. When addressing a large segment a 16-bit offset field, VAIN7:16, preceded by 7 leading 0's is added to a fifteen bit base field concatenated with 8 trailing 0's.

Referring again to Figure 1(b), a small segment descriptor SFDO0:32 associated with a small segment in the system memory is outputted from the small segment descriptor RAM 751 under the control of VAIN0:11 outputted by the segment descriptor update logic 755 to the descriptor selector logic 761. Similarly, a large segment descriptor LFDO0:32 associated with a large segment is outputted from the large segment descriptor RAM 753 under the control of VAIN0:7 as outputted by the segment descriptor update logic 755 to another input of the descriptor selector logic 761. The descriptor selector logic 761 also receives the signal CAD19:23 which is employed to supply segment descriptor information directly to the descriptor selector 761 without passing through the small segment descriptor RAM 751 or the large segment descriptor RAM 753.

The output of the segment descriptor logic 761 comprises the signals SEGD0:32 which are supplied to the odd adder 765 and the even adder 767. The signals SEGD16:6 are also supplied to an access rights checker circuit 759 which also receives the current ring number field from the status register of a device making a request of the system memory. As stated above, if the ring number from the status register is greater than the corresponding ring number fields from the segment descriptor supplied by the descriptor selector logic 761, an access rights violation is detected and the access rights checker circuit will generate the signal MUPROV indicating that a protection violation has been detected.

The segment size comparator 763 receives the signals SEGD23:9 from the descriptor selector logic and compares it to VAIN07:8 or VAIN11:4. If the offset of the virtual address field is larger than the size field of the segment descriptor then appropriate error signals MMUARL or MMUARR will be generated to indicate that an attempt has been made to address an unavailable system memory address.

As stated above, the cache memory is designed to supply two data words in response to a memory request. For this reason, a portion of the cache directory subsystem is divided into two branches. One branch is for determining whether a data word identified by an odd address number is stored in the odd data store and the other branch is to determine whether a data word identified by an even address number is stored in the even data store. Also, as stated, above, the two data words supplied by the cache memory correspond to the data word identified by the virtual address number VAIN0:23 and the data word identified by the address number VAIN0:23 + 1.

It is the function of the odd adder 765 to always generate an odd physical address number in the system memory. In one case, this odd physical address will correspond to the data word identified by the virtual address number VAIN0:23 when this address number is odd. In the other case, the odd adder generates an odd physical address corresponding to the address number VAIN0:23 + 1 when VAIN0:23 identifies an even address number. In the first case, the odd adder 765 generates the odd physical address by adding the segment base to the address number VAIN0:23 when VAIN0:23 is an odd address number. When VAIN0:23 is an even address number, the odd adder 765 generates an odd physical address number by adding the segment base to VAIN0:23 + 1.

The even adder 767 performs a function analogous to that of the odd adder 765 except that the even adder 767 always generates an even physical address number. Thus, if the address number VAIN0:23 is even, the even adder 767 will add the segment base to the address number VAIN0:23 to generate the even physical address number. If VAIN0:23 is an odd address number then the even adder 767 increments the sum of the segment base and the address number VAIN0:23 by 1 to generate an even physical address number.

Since incrementing an even address number by 1 to generate an odd address number never generates a carry, the odd adder 765 is implemented by a 16 bit adder with odd physical address bits OPAD15:7 being equal to VAIN15:7. The least significant bit of the virtual address, VAIN22, is not carried through to either the even or odd physical address numbers. However, since incrementing an odd address number by one to generate an even address number will always propagate a carry, the even adder 767 is 24 bits long in order to propagate the carry across the entire physical address number, EPAD0:22.

It is the function of the descriptor selector logic 761 to control the odd adder 765 such that if the address number VAIN0:23 is odd then the odd adder is inhibited from incrementing by 1 the sum of the segment base and VAIN0:23. However, if the address number VAIN0:23 is even, then the descriptor selector logic 761 controls the odd adder 765 to increment the sum of the segment base and the address number VAIN0:23 by 1 in order to generate the odd physical address, number identifying the second of the two addressed storage locations.

Similarly, the descriptor selector logic 761 controls the even adder 767 to increment the sum of the segment base and the address number VAIN0:23 by one whenever VAIN0:23 is odd. If the address number VAIN0:23 is even, then descriptor selector logic 761 inhibits the even adder 767 from incrementing the sum of the segment base and the address number VAIN0:23 by 1.

Also, since the cache directory control system is divided into odd and even branches beginning with odd adder 765 and even adder 767, there is no need to generate the least significant bit of the odd physical address generated by the odd adder or the even physical address generated by the even adder 767. In the case of the odd physical address, it may always be assumed that the least significant bit is a 1 and in the case of the even physical address it can be assumed that the least significant bit is always a 0. Thus, the physical addresses comprise 22 bits.

Referring again to Figure 4(b), it is apparent that when generating a physical address in a small segment only 4 bits of the segment base and the segment offset overlap. Indeed, the least significant 7 bits of the segment offset, VAIN15:7, are incremented by 0 and thus remain unchanged. Similarly, the most significant 11 bits of the segment base, SEGD1:11, are also incremented by 0 and remain unchanged subject to the generation of a carry by the addition of VAIN11:4 and SEGD12:4. Similarly, if a physical address in a large segment is being generated, the least significant 7 bits of the physical address will be the least significant 7 bits of the segment offset, VAIN15:7. The most significant 7 bits of the physical address will be equal to SEGD1:7 subject to the propagation of a carry from the addition of VAIN7:8 to SEGD8:8. Bits OPAD8:8 will be equal to the sum of SEGD8:8 and VAIN7:8.

It is apparent, from Figure 4(b) and from the above discussion concerning the propagation of a carry when the address number VAIN0:23 is odd, why the even adder 767 must be larger than the odd adder. This enables any carry generated by incrementing VAIN15:7 by 1 to be propagated all the way through the generated even physical address. However, when the address number VAIN0:23 is even, incrementing it by 1 will not generate a carry and, thus, the portion of the segment offset defined by VAIN15:7 need not be included in the odd adder 765.

As illustrated in Figure 1(b), the even adder 767 generates an even physical address EPAD0:22. The odd adder 765 generates the 15 most significant bits of the odd physical address OPAD0:15 and the entire odd physical address comprises OPAD0:15 as the 15 most significant bits concatenated with VAIN15:7 as the 7 least significant bits.

The output of the odd adder 765, OPAD0:15 and the output of the even adder 767, EPAD0:22, are supplied as inputs to the physical address multiplexer 773. The signals OPAD0:15 comprise the 15 high order bits of the odd physical address and the low order 7 bits of the odd physical address are supplied by the virtual address offset field VAIN15:7.

The function of the physical address multiplexer 773 is to select either the generated odd physical address or the generated even physical address and to transmit them to the megabus adapter.

An odd address driver circuit 769 also receives a portion of the odd physical address, OPAD0:12, generated by the odd adder 765. The output of the odd address drivers, OPAD0:12, is supplied as a data input to both the level 1 odd directory 777 and the level 2 odd directory 779. OPAD0:12 is also supplied as one input to the comparator 787 and 789.

The address inputs to the level 1 odd directory 777 and the level 2 odd directory 779 include 10 bits, comprising 3 bits OPAD12:3 as outputted from the odd adder 765 and 7 bits VAIN15:7 which are the outputs of the virtual address drivers 775. Together these 10 low order bits of the odd physical address are employed to address the storage locations in the level 1 odd directory 777 and the level 2 odd directory 779.

The even address drivers 771 receive the even physical address, EPAD0:22, outputted by the even adder 767 and divide them into a row address data input field, EPAD0:12, and a column addressing field, EPAD12:10. The data input field, EPAD0:12, is supplied to the data input terminals of the level 1 even directory 781 and the level 2 directory 783, and also to comparators 791 and 793. The address field, EPAD12:10, is supplied to the address input of the level 1 even directory 781 and the level 2 even directory 783 to select one of the storage locations in the even directory.

The level 1 odd directory 777, level 2 odd directory 779, level 1 even directory 781, and level 2 even directory 783 each comprise memory modules, e.g., random access memories, including 1024 storage locations. Each of the storage locations in the directories is associated with a different one of the storage locations in the data store of the cache memory. Thus, storage location 0 of the level 1 odd directory 777 stores the most significant 12 bits of the odd physical address, OPAD0:12, identifying the data word stored in storage location 0 of the level 1 odd data store 711. Similarly, each of the 1024 storage locations in the level 2 odd directory 779, level 1 even directory 781, and level 2 even directory 783 are associated with corresponding storage locations in the level 2 odd data store 715, level 1 even data store 709, and level 2 even data store 713, respectively.

As stated above, it is the function of the cache directories to store the most significant 12 bits of the physical address numbers identifying data words stored in the cache data stores. The storage locations in each of the directories are addressed by the low order 10 bits of the physical address numbers. As an example, the 1024 storage locations in each of the level 1 odd directory 777 and the level 2 directory 779 are addressed by the 10 low order bits of the odd physical address numbers, i.e., bits OPAD12:3 and VAIN15:7.

The 1024 storage locations in each of the level 1 even directory 781 and the level 2 even directory 783 are addressed by the 10 low order bits of the even physical address numbers, EPAD12:10. Each of the directories outputs a 12 bit data field when addressed. As stated above, these 12 bits correspond to the 12 high order bits of the physical address number identifying the corresponding data word stored in the cache data store. Thus, the level 1 odd directory 777 outputs the level 1 odd bits, L1OD0:12 to the comparator 787 and the level 2 odd directory 779 outputs the level 2 odd bits L2OD0:12 to the comparator 789. The level 1 even directory 781 outputs the level 1 even bits, L1EV0:12 to the comparator 791 and the level 2 even directory 783 outputs the level 2 even bits, L2EV0:12 to the comparator 793.

It is a function of the comparators 787, 789, 791 and 793 to determine whether a particular data word is stored in the data stores of the cache memory by determining whether the high order 12 bits of the physical address identifying a data word stored in the associated storage location of the data store are equal to the high order 12 bits of the physical addresses as generated by the odd adder 765 and the even adder 767 in response to a memory request. For example, the comparator 791 compares the output of the level 1 even directory 871, L1EV0:12, to the high order 12 bits of the even physical address as supplied by the even address drivers 771. The comparator 791 generates a 12 bit output signal L1EH0:12, wherein each of the 12 bits will be true if corresponding bits in the inputs L1EV0:12 and EPAD0:12 are equal. Thus, the bit L1EH0 will be true if the bits L1EV0 and EPAD0 are identical. The operation of the comparators 787, 789 and 793 are identical and they generate the outputs L1OH0:12, L2OH0:12, and L2EH0:12, respectivley.

The outputs of the comparators 787, 789, 791 and 793 are supplied to the hit detector circuit 795. It is a function of the hit detector 795 to determine whether one, both, or neither of the two data words, i.e., data words identified by virtual address numbers corresponding to VAIN0:23 and VAIN0:23 + 1, requested from the system memory are currently resident in the data storing subsystem of the cache memory.

If all of the bits of the signals L1OH0:12 or L2OH0:12 are true then the hit detector circuit 795 will determine that the requested data word identified by the odd address number is currently resident in the odd data stores of the cache memory. Similarly, if all of the signals comprising L1EH0:12 or L2EH0:12 are true then the hit detector circuit 795 will determine that the requested data word identified by the even address number is currently resident in the even data stores of the cache memory.

As stated above, when a request is made for a data word from the system memory, both that data word and the next successive data word are supplied either directly from the system memory or from the cache memory. If the data word identified by the address number VAIN0:23 is resident in the cache then the hit detector circuit 795 will indicate this by generating the signal LFTHIT. If the data word identified by the address number VAIN0:23 + 1 is currently resident in one of the data stores of the cache memory, the hit detector circuit 795 generates the signal RGTHIT. Thus, if both data words are resident in the cache data stores, the left and right hit signals, LFTHIT and RGTHIT, will be generated and if neither of the requested data words is resident in the cache data stores then neither the left or right hit signals, LFTHIT and RGTHIT, will be generated.

The cache update logic 797 receives the hit signals LFTHIT and RGTHIT and determines whether a system memory access must be generated in order the supply the requested data words. If such a system memory access is necessary then the cache update logic 797 will generate the appropriate control signals to initiate a system memory access and also to insure that the data word or data words supplied by the system memory are properly stored in the data stores of the cache memory and that the proper entries are made into the directory stores of the cache memory. These control signals are symbolized by the output CACNTRL and will be discussed in detail hereinafter.

The operation of the diagnostic subsystem within the cache will now be discussed. This subsystem is included in the segment descriptor update logic 755, cache update logic 797, and the mode register 757. As described above, the mode register is a 16-bit register which is settable by software and firmware routines. Depending upon the combination of states of the 16 bits, one or more individual aspects of certain machine operations may be modified.

The first of the bits is the initialize bit, INITLZ, the function of which is to provide a means for setting an initial state into the cache directories 777, 779, 781, and 783. Initialization is needed when power is applied to the machine with the result that the cache directories are placed in unknown states. The purpose of initialization is to store known addresses in the cache directories. To this end, the data words stored in the first 2048 storage locations of the system memory are copied into the storage locations in the level 1 even and odd data stores 709 and 711, respectively. The data words stored in the next 2048 storage locations in the system memory are copied into the storage locations of the level 2 even and odd data stores 713, 715, respectivley. As the data words are stored in the data storing subsystem of the cache memory, the cache directory subsystem stores the 12 high order bits of the associated physical addresses in the level 1 and 2 even and odd directory stores.

The second bit of the mode register is the inhibit rights check bit, IHRGCK. This bit controls the memory protect function of the main memory unit and is employed to bypass the operation of the access rights checker circuit 759 in determining whether a given user or requestor has the proper level of privilege to access referenced memory segments. If IHRGCK is set, the checking mechanism is suppressed and accesses are permitted to any memory location

The address relocation inhibit bit, ARLINH, is employed to suppress the translation of virtual addresses to physical addresses and permit any address presented to the MMU in the VAIN0:23 field to be treated as a physical address. If ARLINH is set, the cache directory subsystem will not treat virtual and physical addresses differently.

When set, the cache bypass bit, CABYP, of the mode register 757 enables a user to make all memory references directly to the system memory without employing the cache memory. Thus, when CABYP is set, all memory reads will see a miss for the cache and the data will be supplied from the system memory. However, the cache data stores will be updated if any new information is written into the system memory from the central subsystem or other system processors and I/O devices.

The force miss bit, FRCMIS, of the mode register 757 performs a similar function to the CABYP bit. When FRCMIS is set, all memory references will see a miss in the cache directory subsystem and all memory reads will be done from the system memory. The purpose of this bit is to provide a means for checking the replacement of new information in the cache whenever there is a correction. This provides a diagnostic tool to test the response of the hardware in the absence of requested data words in the cache.

The fault no-hit mode bit, FNHMDE, causes the hardware to generate an unavailable resource signal for any memory reference that does not see a hit in the cache directory subsystem. The purpose of this bit is to enable the hardware mechanism determining whether data words are present in the cache to be checked. In this mode, specific data words are stored in the cache and then requests for access to those data words are generated. If the cache directory subsystem determines that the data words are not present in the cache an error indication will be generated.

The mode register 757 further includes a memory reference wrap bit, MRWRAP, to allow the local bus processors to enter write operation into a FIFO in the megabus adapter. This permits the generation of requests to the FIFO without the use of I+O operations. Normally, data written from one of the local bus processors goes directly into the system memory and bypasses the FIFO of the megabus adapter. If MRWRAP is set these memory writes will be entered into the FIFO.

The write directory bit, WRDRTY, of the mode register 757 controls the directory circuitry, and particularly the cache update logic circuitry 797 and the segment descriptor update logic 755 to check the current entries in the directory store 777, 779, 781 and 783. The function of the write directory bit is to suppress an unavailable resource error whenever a generated physical memory address number exceeds the maximum number of physical memory locations present in a given computer system. This enables all of the storage locations in the cache directory subsystem to be tested by enabling address numbers corresponding to the highest theoretical address number to be stored in the cache directories regardless of the actual amount of memory present in the system.

The bypass memory bit, BYPMRY, of the mode register 757 inhibits all communication from the cache/MMU to the megabus adapter so that all memory references are shortcircuited to the data storing subsystem of the cache memory and no references are made to the megabus. This enables faults to be isolated to the local bus system or the megabus system.

When set, the force hit bit, FRCHIT, of the mode register 757 allows every memory reference from one of the local bus processors to receive acknowledgement of a hit in the cache memory by the hit detector circuit 795. This functionality enables further testing of the cache memory because data words can be written into the cache memory when FRCHIT is set without having those data words written into the system memory. Thus, the integrity of the system memory will be maintained but the operability of the cache directory subsystem may be tested. Further, when FRCHIT is set, certain information can be written into the cache memory and completely different information written into corresponding addresses in the system memory. The operability of both the cache memory and the system memory can be tested by determining whether information is returned from the cache memory or the system memory in response to requests for data words.

The mode register 757 further includes a level 2 force hit bit, L2FHIT, which defines which path of the cache directory subsystem is being accessed. Thus, if FRCHIT is set indicating that the cache memory is operating in the force hit mode, the value of L2FHIT will determine whether the hit is to be forced in the even and odd data stores of level 1 or level 2.

## Claims

1. A cache memory module for use in a data processing system having a data processor and a main memory, said main memory holding a data unit in each of a plurality of addressible storage cells; said data processor, when executing an operation to read a data unit from, or to write a data unit into one of said storage cells, supplying the address of said storage cell; said cache memory module comprising:

first (709, 713) and second (711, 715) addressible data stores, said first data store (709, 713) holding only data units which are copies of data units held in storage cells of said main memory accessible by even addresses, said second data store (711, 715) holding only data units which are copies of data units held in storage cells of said main memory accessible by odd addresses, each of said data units being held in a storage cell of said first and second data stores (709, 713, 711, 715) whose address is a lower order portion of the main memory address of said data unit;

first (781, 783) and second (777, 779) addressible directories, each storage cell of said first directory holding an upper order portion of the main memory even address of the data unit held in a corresponding storage cell of said first data store (709, 713), each storage cell of said second directory (781, 783) holding an upper order portion of the main memory odd address of the data unit held in a corresponding storage cell of said second data store (711, 715), each of said upper order address portions being held in a storage cell of said directories whose address is the same as the address of the storage cell of the data store holding the corresponding data unit:

characterized in that, in order to supply two data units in response to a single request, there are provided:

control means (761) to control even means (767) for incrementing by 1 the main memory address when odd and for passing said main memory address when even, and to control odd means (765) for incrementing by 1 the main memory address when even and for passing said main memory address when odd; and

circuit means (769, 771) for simultaneously supplying the incremented or non-incremented address from said even means to said first store (709, 713) and said first directory (781, 783) and the non-incremented address from said odd means to said second store (711, 715) and said second directory (777, 779).

2. A cache memory module according to Claim 1 and further comprising:

first (791, 793) and second (787, 789) comparators each having first and second sets of input terminals, said first set of input terminals receiving output signals from each of said first and second directories (781, 783, 777 779), said second set of input terminals receiving the upper order portion of said main memory address; and cache store control means (795, 797) responsive to the signals delivered by said first and second comparators (787, 789, 791, 793) to supply the two data units in response to the single request.

3. A cache memory module according to Claim 2 wherein said cache store control means (795, 797) includes logic (797) responsive to signals which denote whether or not either or both of the two data units are resident in the cache data stores (709, 713, 711, 715) and for generating control signals (CACNTRL) to retrieve one or two data units from said main memory whereby two data units are always supplied in response to the single request.

## Revendications

1. Module anté-mémoire destiné à être utilisé dans un système de traitement de données comprenant un processeur de données et une mémoire principale, ladite mémoire principale comportant une donnée élémentaire dans chaque cellule d'une pluralité de cellules de stockage adressables; ledit processeur de données, lorsqu'il effectue une opération de lecture d'une donnée élémentaire ou une écriture d'une donnée élémentaire dans une des cellules de stockage, fournissant l'adresse de ladite cellule de stockage; ledit module anté-mémoire comprenant:

   des première (709, 713) et seconde (711, 715) mémoires de données adressables, ladite première mémoire de données (709, 713) comportant seulement des données élémentaires qui sont des copies des données élémentaires présentes dans les cellules de stockage de ladite mémoire principale accessibles par des adresses paires, ladite seconde mémoire de données (711, 715) comportant seulement des données élémentaires qui sont des copies des données élémentaires présentes dans les cellules de stockage de ladite mémoire principale accessibles par des adresses impaires, chacune desdites données élémentaires étant présente dans une cellule de stockage des première et seconde mémoires de données (709, 713, 711, 715) dont l'adresse est une partie d'ordre inférieur de l'adresse de mémoire principale de ladite donnée élémentaire;

   des premier (781, 783) et second (777, 779) répertoires adressables, chaque cellule de stockage du premier répertoires comportant une partie d'ordre supérieur de l'adresse paire de mémoire principale de la donnée élémentaire présente dans une cellule de stockage correspondante de la première mémoire de données (709, 713) chaque cellule de stockage du second répertoire (781, 783) comportant une partie d'ordre supérieur de l'adresse impaire de mémoire principale de la donnée élémentaire présente dans une cellule de stocka ge correspondante de la seconde mémoire de données (711, 715) chacune des parties d'adresse d'ordre supérieur étant présente dans une cellule de stockage desdits répertoires dont l'adresse est identique à l'adresse de la cellule de stockage de la mémoire de données comportant la donnée élémentaire correspondante;

   caractérisé en ce que, afin de fournir deux données élémentaires en réponse à une requête unique, sont prévus:

   un moyen de commande (761) pour commander un moyen pair (767) pour incrémenter de 1 l'adresse de la mémoire principale quand elle est impaire et pour passer ladite adresse de la mémoire principale lorsqu'elle est paire, et pour commander un moyen impair (765) pour incrémenter de 1 l'adresse de la mémoire principale lorsqu'elle est paire et pour passer ladite adresse de la mémoire principale lorsqu'elle est impaire; et

   un moyen de circuit (769, 771) pour fournir simultanément l'adresse incrémentée ou non incrémentée provenant dudit moyen pair à ladite première mémoire (709, 713) et audit premier répertoire (781, 783), ainsi que l'adresse non incrémentée provenant dudit moyen impair à ladite seconde mémoire (711, 715) et audit second répertoire (777, 779).

2. Module anté-mémoire selon la revendication 1, comprenant en outre:

   des premier (791, 793) et second (787, 789) comparateurs dont chacun comporte des premier et second ensembles de bornes d'entrée, ledit premier ensemble de bornes d'entrée recevant des signaux de sortie provenant de chacun desdits pemier et second répertoires (781, 783, 777, 779), ledit second ensemble de bornes d'entrée recevant la partie d'ordre supérieur de ladite adresse de mémoire principale; et un moyen de commande d'anté-mémoire (795, 797) sensible aux signaux délivrés par lesdits premier et second comparateurs (787, 789, 791, 793), pour fournir les deux données élémentaires en réponse à la requête unique.

3. Module anté-mémoire selon la revendication 2, dans lequel ledit moyen de commande de l'anté-mémoire (795, 797) comporte un dispositif logique (797) sensible aux signaux qui indiquent si oui ou non chacun ou l'ensemble des deux données élémentaires sont présentes dans les anté-mémoires de données (709, 713, 711, 715) et pour générer des signaux de commande (CACNTRL) pour retrouver une ou deux données élémentaires à partir de ladite mémoire principale dans laquelle deux données élémentaires sont toujours fournies en réponse à la requête unique.

## Ansprüche

1. Cache-Speicher-Modul zur Verwendung in einem Daten-Verarbeitungssystem mit einem Datenprozessor und einem Hauptspeicher, wobei der Hauptspeicher eine Dateneinheit in jeder aus einer Vielzahl von adressierbaren Speicherzellen hält; wobei der Datenprozessor, wenn eine Operation zum Lesen einer Dateneinheit daraus oder zum Schreiben einer Dateneinheit in eine der Speicherzellen ausgeführt wird, die Adresse an die Speicherzelle liefert; wobei das Cache-Speicher-Modul aufweist: erste (709, 713) und zweite (711, 715) adressierbare Datenspeicher, wobei der erste Datenspeicher (709, 713) nur Dateneinheiten hält, welche Kopien von Dateneinheiten sind, die in Speicherzellen des Hauptspeichers gehalten werden, zugreifbar durch gerade Adressen, wobei der zweite Datenspeicher (711, 715) nur Dateneinheiten hält, die Kopien von Dateneinheiten sind, welche in Speicherzellen des Hauptspeichers gehalten werden, zugreifbar durch ungerade Adressen, wobei jede der Dateneinheiten in einer Speicherzelle der ersten und zweiten Datenspeicher (709, 713, 711, 715) gehalten werden, deren Adresse ein Teil niedriger Ordnung der Hauptspeicheradresse der Dateneinheit ist;
erste (781, 783) und zweite (777, 779) adressierbare Verzeichnisse, wobei jede Speicherzelle des ersten Verzeichnisses einen Teil höherer Ordnung der Hauptspeicher-geradzahligen Adresse der Dateneinheit hält, welche in einer entsprechenden Speicherzelle des ersten Datenspeichers (709, 713) gehalten wird, wobei jede Speicherzelle des zweiten Verzeichnisses (781, 783) einen Teil höherer Ordnung der Hauptspeicher-ungeradzahligen Adresse der Dateneinheit hält, welche in einer entsprechenden Speicherzelle des zweiten Datenspeichers (711, 715) gehalten wird, wobei jede der Adressteile höherer Ordnung in einer Speicherzelle der Verzeichnisse gehalten wird, deren Adresse dieselbe ist wie die Adresse der Speicherzelle des Datenspeichers, welcher die entsprechende Dateneinheit hält; **dadurch gekennzeichnet,**
daß zur Zuführung von zwei Dateneinheiten in Reaktion auf eine einzelne Anforderung vorgesehen sind:
Steuereinrichtungen (761) zum Steuern geradzahliger Einrichtungen (767) zum Inkrementieren um 1 der Hauptspeicheradresse, wenn sie ungeradzahlig ist, und zum Weiterleiten der Hauptspeicheradresse, wenn sie geradzahlig ist, und zum Steuern von ungeradzahligen Einrichtungen (765) zum Inkrementieren um 1 der Hauptspeicheradresse, wenn sie geradzahlig ist, und zum Weiterleiten der Hauptspeicheradresse, wenn sie ungeradzahlig ist; und
Schaltungseinrichtungen (769, 771) zum gleichzeitigen Zuführen der inkrementierten oder nicht inkrementierten Adresse von den geradzahligen Einrichtungen zu dem ersten Speicher (709, 713) und dem ersten Verzeichnis (781, 783) und der nicht inkrementierten Adresse von den ungeradzahligen Einrichtungen zu dem zweiten Speicher (711, 715) und dem zweiten Verzeichnis (777, 779).

2. Cache-Speicher-Modul nach Anspruch 1, und ferner aufweisend: erste (791, 793) und zweite (787, 789) Vergleicher, die jeweils eine erste und zweite Gruppe von Eingangsanschlüssen haben, wobei die erste Gruppe von Eingangsanschlüssen Ausgangssignale von jedem der ersten und zweiten Verzeichnisse (781, 783, 777, 779) empfängt, wobei die zweite Gruppe von Eingangsanschlüssen den Teil höherer Ordnung der Hauptspeicheradresse empfängt; und Cache-Speicher-Steuereinrichtungen (795, 797), die auf die von dem ersten und zweiten Vergleicher (787, 789, 791, 793) abgegebenen Signale ansprechen, um die zwei Dateneinheiten in Reaktion auf die einzelne Anforderung zu liefern.

3. Cache-Speicher-Modul nach Anspruch 2, wobei die Cache-Speicher-Steuereinrichtung (795, 797) eine Logik (797) aufweist, die auf Signale anspricht, welche angeben, ob oder nicht eine oder beide der zwei Dateneinheiten in den Cache-Daten-Speichern (709, 713, 711, 715) resident sind und zum Erzeugen von Steuersignalen (CACNTRL), um eine oder zwei Dateneinheiten aus dem Hauptspeicher wiederzufinden, wobei zwei Dateneinheiten immer in Reaktion auf die einzelne Anforderung geliefert werden.

LBDT 0:32
MBDT 0:32
401
703
ODD ADDER
EVEN ADDER
VAIN 0
CACHE INPUT EVEN
DATA MUX ODD
705
707
CADI 0:16
CADI 16:16
DATA STORE ADDR. DRIVERS
727
LOCAL DATA INPUT MULTIPLEXER 701
CADI 0:16
CADI 16:16
LDTR 0:16
LDTR 16:16
709
LEVEL 1 EVEN DATA STORE
711
LEVEL 1 ODD DATA STORE
713
LEVEL 2 EVEN DATA STORE
715
LEVEL 2 ODD DATA STORE
EVDS 0:16
ODDS 0:16
PHADO:23
L2EV 0:16
L2OD 0:16
PHYSICAL ADDR + LB DRIVERS
725
LEVEL 1 OUTPUT EVEN
DATA MUX ODD
719
717
LEVEL 2 OUTPUT EVEN
DATA MUX ODD
721
723
CADO 0:16
CADO 16:16
L2DO 0:16
L2DO 16:16
LOCAL BUS INTERFACE CIRCUIT
726
LOCAL BUS

FIG. 1 a

CADI 0:32
MODE REGISTER
757
755
SEGMENT DESCRIPTOR UPDATE LOGIC
VAIN 7:4
VAIN 0:8
ENBSAF
WRDSCR
DI
SMALL SEGMENT DESCRIPTOR RAM
751
753
DI
LARGE SEGMENT DESCRIPTOR RAM
WRDSCR
ENBLAF
CADI 9:23
RING #
LBWRIT
SEGD 16:6
VABN 07:4
SEGD 24:4
SFDO 0:32
LFDO 0:32
ACCESS RIGHTS CHECKER
759
DESCRIPTOR SELECTOR LOGIC
761
763
SEGMENT SIZE COMPARATOR
MMUARL
MMUAR
VAIN 0:14
MUPROV
SEGD 0:32
VAIN 0:23
ODD ADDER
765
767
EVEN ADDER
VAIN 15:7
OPAD 0:14
EPAD 0:22
OPAD 12:3
OPAD 0:12
775
VAIN 15:7
771
PAMX 0:23
PHYSICAL ADDRESS MULTIPLEXER
773
ODD ADDRESS DRIVERS
769
VIRTUAL ADDRESS DRIVERS
EVEN ADDRESS DRIVERS
OPAD 0:12
VAIN 15:7
EPAD 0:12
EPAD 12:12
LEVEL 1 ODD DIRECTORY
LEVEL 2 ODD DIRECTORY
779
LEVEL 1 EVEN DIRECTORY
781
LEVEL 2 EVEN DIRECTORY
783
DI
DI
777
L1OD 0:12
L2OD 0:12
L1EH 0:12
L2EH 0:12
789
793
COMPARATOR
COMPARATOR
COMPARATOR
791
COMPARATOR
787
L1OH 0:12
L2OH 0:12
L1EH 0:12
L2EH 0:12
795
HIT DETECTOR
LFTHIT
RGTHIT
CACHE UPDATE LOGIC
CACNTRL
797


FIG. 1 b

CACHE DIRECTORY DATA
CACHE ADDRESS
ODD/EVEN DESIGNATION BIT
CASE 1
LEVEL 1 EVEN DATA STORE
LEVEL 2 EVEN DATA STORE
REPLACEMENT TABLE
SYSTEM MEMORY
CASE 2
LEVEL 1 EVEN DATA STORE
LEVEL 2 ODD DATA STORE
REPLACEMENT TABLE
INVALID
VALID
BASE
SIZE
R R R W R E 0
901
903
905
907
903a
905a
907a


FIG. 2

FIG. 3

SEGMENT TABLE
0
1
2
3
4
5
6
15
PA0
PA1
PA2
PA3
PA2
MEMORY SEGMENT
SEGMENT OFFSET
DATA WORD
DW
9
19
VAIN 11:12
31
00000000000
OFFSET
BASE
00000000
PHYSICAL ADDRESS
SMALL
VAIN 8:15
31
0000000
OFFSET
BASE
00000000
PHYSICAL ADDRESS
LARGE
SEGD 1:15

FIG. 4a

FIG. 4b